# FASCICULE DE BREVET EUROPEEN

(11) **EP 4 584 220 B1**
(45) Date de publication et mention de la délivrance du brevet: **08.04.2026**
(21) Numéro de dépôt: 23764622.9
(22) Date de dépôt: 31.08.2023
(51) Int. Cl.: C03B 23/03, C03B 27/004, C03B 27/016

(54) **OUTIL DE REFROIDISSEMENT LOCAL D'UNE FEUILLE DE VERRE**
WERKZEUG ZUM LOKALEN KÜHLEN EINER GLASSCHEIBE
TOOL FOR LOCALLY COOLING A GLASS SHEET

(30) Priorité: 06.09.2022 FR 2208902
(43) Date de publication de la demande: 16.07.2025
(73) Titulaire: Saint-Gobain Sekurit France, 60150 Thourotte (FR)
(72) Inventeur: RAPENNE, Thibault, 92400 COURBEVOIE (FR); MACHURA, Christophe, 92400 COURBEVOIE (FR); VALCKE, David, 92400 COURBEVOIE (FR)
(74) Mandataire: Saint-Gobain Recherche
(86) Numéro de dépôt international: PCT/EP2023/073950
(87) Numéro de publication internationale: WO 2024/052214

(56) Documents cités:
- JP-A- H11 157 859
- US-A1- 2019 127 260
- US-B2- 9 670 714

## Description

La présente invention appartient au domaine du formage des verres.

### Art antérieur

Le développement de système de capteurs type camera, lidar, etc, se multiplie de plus en plus pour rendre les véhicules de plus en plus autonome, or l'arrivée des lidars et camera sur la face avant des véhicules impose d'avoir des zones de vision de plus en plus grande et particulièrement neutre vis-à-vis des ondes dans le cas des lidars. La nature du verre utilisé actuellement mais aussi la méthode d'assemblage d'un feuilleté rend impossible cette utilisation sur les vitrages actuels, plusieurs solutions se sont développées pour supprimer ces barrières comme le traitement du verre ou l'utilisation de deux verres de nature différente. Dans ce dernier cas, on a un verre extérieur laissant passer les ondes et le verre intérieur qui est découpé dans la zone concerné. L'autre problématique est le formage du verre, en effet, les dimensions de plus en plus importante des ouvertures et leurs formes rendent le vitrage plus fragile pendant les manipulations de celui-ci. Si pour un formage par gravité, le verre intérieur (petit verre) est supporté pendant sa phase de formage par le verre extérieur (grand verre), sur un procédé feuille à feuille avec un formage entre deux formes inférieures et supérieures, les verres sont manipulés, formés, un par un. Les casses peuvent être plus nombreuses car les découpes favorisent l'apparition de zones fragiles.

EP2766184B1 concerne un procédé de fabrication d'un vitrage feuilleté comprenant sa découpe et le refroidissement par contact avec un outil de refroidissement local d'une zone du vitrage.

### Résume de l'invention

La présente invention cherche donc à résoudre les inconvénients de l'art antérieur en fournissant un outil de refroidissement qui permet de traiter une zone à la forme complexe et de grande surface.

A ce titre, l'invention concerne un outil de refroidissement local par contact d'une feuille de verre à une température supérieure à 450°C, dit outil de contact, comprenant au moins une surface de contact destinée à venir au contact de la feuille de verre, ledit outil comprenant une canalisation intérieure pour la circulation d'un fluide de refroidissement, notamment de l'air, caractérisé en ce que la surface de contact présente une forme non circulaire, ledit outil comprenant une coque inférieure et une coque supérieure assemblées pour former une enceinte dans lequel le fluide de refroidissement est envoyé, la coque supérieure portant ladite surface de contact, et en ce que l'outil comprend une buse connectée à la canalisation et débouchant dans ladite enceinte, ladite buse comprenant une pluralité d'ouvertures est configurée pour diffuser le fluide de refroidissement de manière homogène dans l'enceinte.

Selon un exemple, la surface de contact s'étend sur toute ou partie de la coque supérieure.

Selon un exemple, la surface de contact est une surface pleine ou un contour

Selon un exemple, la canalisation débouche sur la coque inférieure.

Selon un exemple ladite buse présente la même forme que la face de contact dudit outil

Selon un exemple, ladite buse présente une forme différente de celle de la face de contact dudit outil.

Selon un exemple, les trous de ladite buse sont régulièrement répartis.

Selon un exemple, la répartition des trous de ladite buse est inégale.

Selon un exemple, l'outil de refroidissement est monté mobile sur amortissement. Selon un exemple, l'outil de refroidissement est monté sur au moins un élément de translation pour être appliqué au contact de la surface à refroidir, cet élément de translation comprend au moins un élément ressort.

L'invention concerne en outre une station de bombage d'une feuille de verre dans laquelle une feuille de verre à une température supérieure à 450°C est amené entre une forme supérieure et une forme inférieure pour y être mise en forme, caractérisé en ce que la forme inférieure est agencée pour intégrer au moins un outil selon l'une des revendications 1-11.

L'invention concerne en outre un procédé de refroidissement d'une zone d'une feuille de verre, ladite feuille de verre étant amenée dans une station de bombage selon la revendication 12, ledit procédé consistant à, lorsque la feuille de verre est pincée entre la forme supérieure et la forme inférieure, plaquer ledit au moins un outil de refroidissement, par au moins une surface de contact, sur la feuille de verre pour y injecter un fluide de refroidissement de sorte à créer des contraintes de compression dans la zone de la feuille de verre en contact avec ledit outil de refroidissement.

### Description des figures

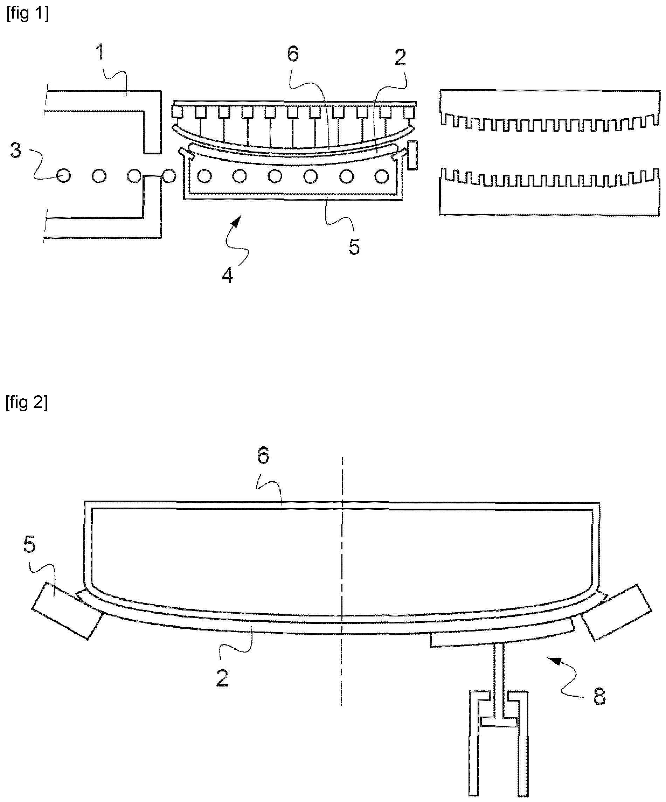

D'autres particularités et avantages ressortiront clairement de la description qui en est faite ci-après, à titre indicatif et nullement limitatif, en référence aux dessins annexés, dans lesquels :
- le figure 1 représente une vue d'une ligne équipé d'une four et d'une station de bombage;
- les figure 2 et 3 représentent une vue totale et partielle d'une station de bombage selon l'invention;
- les figure 4a, 4b, 4c et 5 représentent une vue totale et partielle d'une outil de refroidissement selon l'invention;
- les figures 6 à 7 représentent les solutions possibles pour la buse de l'outil de refroidissement selon l'invention ;
- la figure 8 représente des variantes sur la disposition, la configuration des trous pour la buse de l'outil de refroidissement selon l'invention ;
- la figure 9 représente une variante de l'outil de refroidissement selon l'invention monté sur ressort ;
- les figures 10 et 11 représentent une variante de l'outil de refroidissement avec des trous d'évacuation.

### Description détaillée

Sur la figure 1, un four 1 dans lequel une feuille de verre 2 défile sur un convoyeur à rouleaux 3 est représenté. Durant son séjour dans le four 1, la feuille de verre 2 est amenée à sa température de ramollissement, supérieure à 450°C. La feuille de verre 2 est ensuite conduite toujours supportée par le convoyeur 3 jusqu'à une station de bombage 4.

Cette station de bombage 4 est l'endroit où la feuille de verre ramollie est manipulée pour prendre sa forme quasi définitive.

Dans la station de bombage 4, un cadre de pressage 5 est disposé sous le plan défini par le convoyeur à rouleaux 3. Lorsque la feuille de verre 2 arrive au-dessus de ce cadre, des organes non représentés sur les figures permettent d'assurer un positionnement précis de ladite feuille de verre, puis son mouvement est arrêté par l'arrêt des rouleaux dans la zone de bombage. Le cadre de pressage 5 traverse alors le lit de rouleaux 3 pour venir soulever la feuille de verre.

Comme évoqué précédemment, le cadre de pressage 5 possède la forme que l'on souhaite conférer à la feuille de verre et permet de conformer la feuille de verre. Le cadre de pressage 5 est conçu de façon à pouvoir traverser le lit de rouleaux 3.

Le cadre de pressage 5 ayant pris en charge la feuille de verre 2 se déplace, par l'intermédiaire d'élément de translation du type vérin pour presser celle-ci contre une forme de bombage 6 positionnée au-dessus du cadre de pressage 5. La mise en forme de la feuille de verre se fait donc en pressant la feuille de verre entre la forme de bombage 6 et le cadre de pressage 5. En fin de pressage, un système d'aspiration permet de plaquer parfaitement la feuille de verre sur la forme supérieure.

La forme de bombage 6 (aussi appelée forme supérieure) comprend une face de bombage, de préférence pleine c'est à dire continue et uniforme, dont la forme est préférentiellement carrée mais peut prendre d'autres formes comme rectangulaire ou bien quelconque. La face de bombage présente une surface ou une aire définie par la projection du contour de la forme supérieure sur un plan horizontal est au moins égale à la surface ou l'aire définie par la projection du contour extérieur du cadre de pressage.

Les feuilles de verre sont réalisées, de préférence, en un verre minéral comprenant au moins 40% de silice. Il s'agit généralement d'un verre silicosodocalcique. D'autres types de verre peuvent être utilisés.

Les feuilles de verre ont une épaisseur comprise dans le domaine allant de 0,8 à 5 mm. On vise plus particulièrement les feuilles de verre d'épaisseur 1,6 mm ou 2,1 mm ou 2,6 mm. Les feuilles de verre peuvent être recouvertes ou non d'une ou plusieurs couches minces telle qu'une ou plusieurs couches anti-IR par exemple à l'argent ou une ou plusieurs couches dites Low-E : ces couches ne sont pas prises en compte dans les plages d'épaisseurs de feuilles de verre données dans la présente demande.

Selon l'invention, un outil de refroidissement local 8 est agencé pour, localement, refroidir la feuille de verre comme visible à la figure 2. Ce refroidissement local a pour but de créer des contraintes de compressions pour découper le verre ultérieurement, la surface découpée étant, de préférence, supérieure à celui d'un perçage classique, c'est-à-dire supérieure à 60mm².

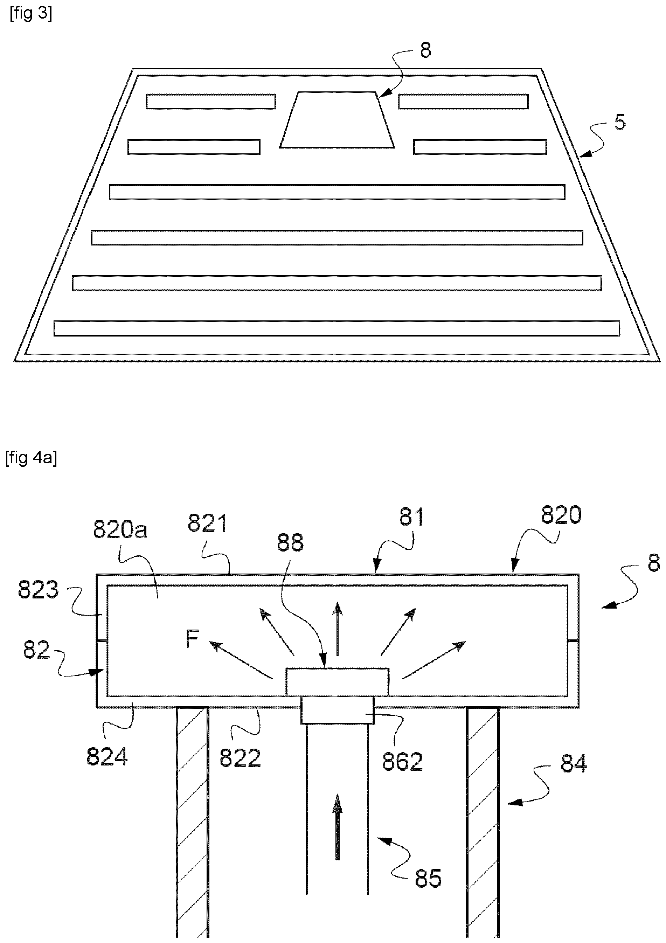

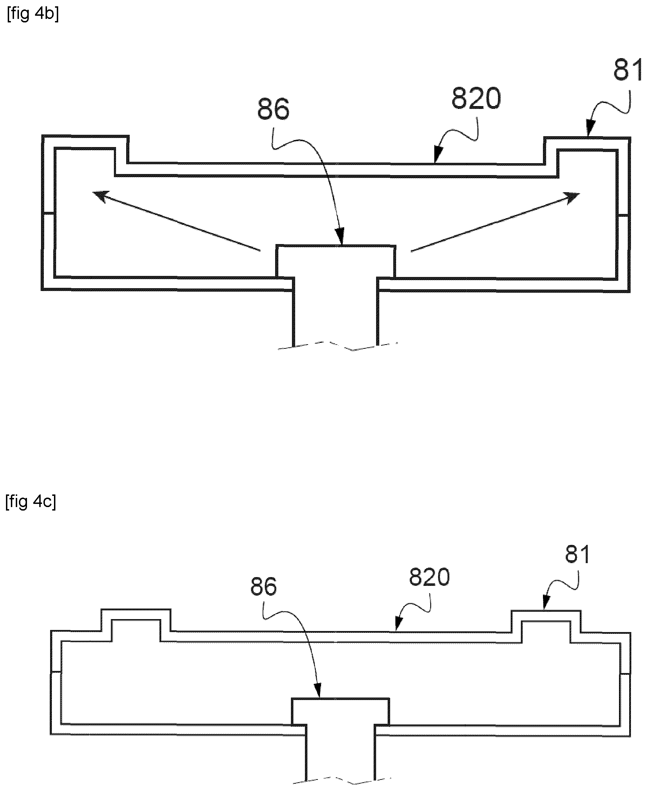

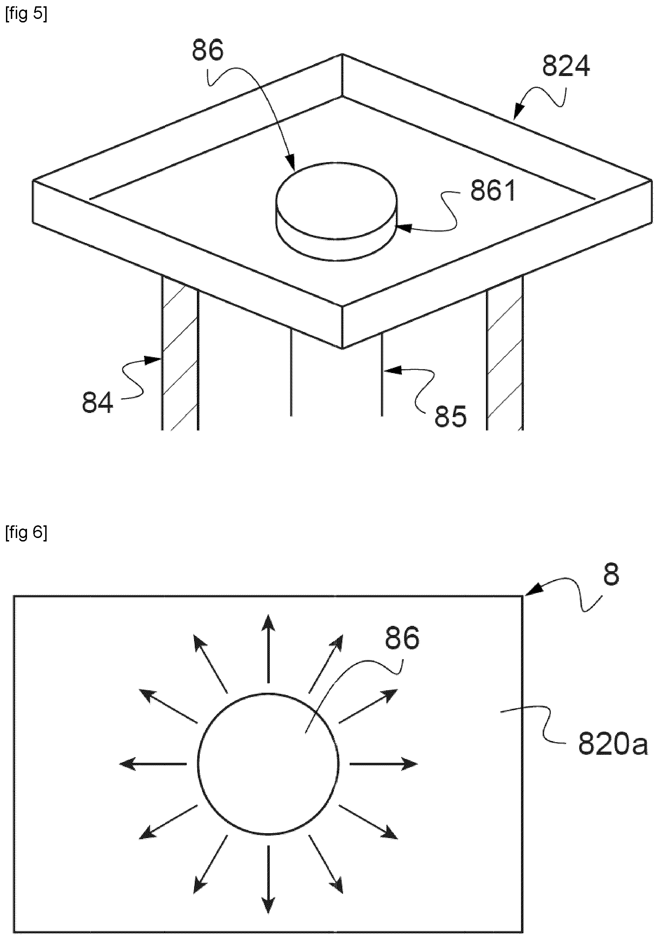

L'outil de refroidissement local 8, visible aux figures 4a, 4b, 4c et 5, comprend au moins une surface de contact 81 destinée à être en contact avec la feuille de verre 2 pour son refroidissement local. Cette surface de contact 81 est située sur la face de l'outil de refroidissement local 8 en regard de la feuille de verre 2. La surface de contact 81 s'étend sur toute ou partie la face de l'outil 8 en regard de la feuille de verre 2. Cette surface de contact 81 peut être pleine ou être un contour. Ce contour peut être celui de la face de l'outil de refroidissement 8 ou être dans ladite face. Le contour se présente, sur la face de l'outil de refroidissement 8, sous la forme d'une partie saillante de la face de l'outil de refroidissement 8.

L'outil de refroidissement 8 comprend une tête de refroidissement 82 se présentant sous la forme d'une enveloppe 820 formant une enceinte 820a. Cette enveloppe 820 présente une face supérieure 821 en regard de la feuille de verre et une face inférieure 822. La face supérieure 821 porte la surface de contact 81. La face inférieure est agencée pour le montage de ladite tête de refroidissement 82 dans la station de bombage 4. Pour cela, la face inférieure 822 est telle qu'elle permet l'ancrage d'au moins un élément de translation 84 comme un vérin qui est défini comme un élément mécanique ou électromécanique permettant la translation de deux éléments l'un par rapport à l'autre. De préférence la tête de refroidissement est portée par deux éléments de translation 84.

L'enveloppe 820 est formée par deux coques: une coque supérieure 823 et une coque inférieure 824. De préférence, ces coques 823, 824 sont des demi-coques. La demi coque supérieure est la demi-coque qui présente la surface supérieure 821 de l'enveloppe 820 portant la surface de contact 81 alors que la demi coque inférieure porte le ou les éléments de translation 84. L'enceinte 820a formée par les demi-coques 823, 824 est apte à la circulation d'un fluide de refroidissement. Un tel fluide de refroidissement F peut être un liquide ou un gaz. Ce fluide de refroidissement F est amené vers l'outil par une canalisation 85. Cette canalisation 85 débouche sur la demi coque inférieure.

Dans l'enceinte 820a formée par les demi-coques 823, 824, une buse 86 est agencée. Cette buse 86 est connectée à la canalisation 85 et comprend des ouvertures 861 de sorte à pourvoir diffuser le fluide de refroidissement F comme visible à la figure 6. Pour cela, la demi coque inférieure 824 est muni d'une embase 87 comprenant une portion extérieure, à l'extérieure de l'enveloppe 820, et une portion intérieure, c'est-à-dire débouchant dans l'enceinte 820a de l'enveloppe 820. La portion extérieure est utilisée pour la connexion de la canalisation et la portion intérieure est utilisée pour la connexion de la buse.

Par conséquent, le fluide de refroidissement F circule dans l'enceinte 820a formée par les demi-coques. Ce fluide de refroidissement tend à refroidir les demi-coques 823, 824. Comme la demi-coque supérieure 823 porte la surface en contact 81 avec la feuille de verre, cette dernière est refroidie. Ce refroidissement induit l'apparition de contrainte sur ladite feuille de verre.

Astucieusement selon l'invention, la surface de contact 81 présente une forme non circulaire. Cette forme non circulaire peut être un parallélépipède comme carré ou rectangulaire ou plus complexe comme trapézoïdale ou toute autre forme non circulaire. Dans le cas où la surface de contact se présente comme étant la totalité de la surface supérieure ou comme étant le contour de la demi-coque supérieure 823 alors ladite demi-coque supérieure 823 et donc la tête de refroidissement présente une forme non circulaire.

La forme non circulaire de la surface de contact nécessite des ajustements pour permettre un refroidissement de la feuille de verre qui reste homogène malgré l'inhomogénéité de la forme de l'enveloppe.

Si la forme de l'outil de refroidissement et/ou de la surface de contact imposent des contraintes, la surface de la zone de la feuille de verre à traiter implique également des contraintes. En effet, dans le cas d'une surface inférieure à 20 cm2, la diffusion d'un fluide de refroidissement est simple puisque la faible surface impose une enceinte qui sera vite refroidie et de façon homogène. Dans le cas d'une surface supérieure à 20 cm2, des contraintes apparaissent. En effet, si la surface augmente alors cela signifie que la distance entre le contour de l'enveloppe et la buse 86 augmente également. Cette augmentation de la surface implique un refroidissement qui cherche à être le plus homogène.

Pour cela, une première solution consiste à avoir une buse 86 dont la forme est circulaire comme visible à la figure 6. Cette buse 86 se présente sous la forme d'un palet c'est-à-dire d'une pièce circulaire présentant une paroi latérale. Cette paroi latérale est pourvue d'une série d'ouvertures 861 par lesquelles le fluide de refroidissement est éjecté, expulsé.

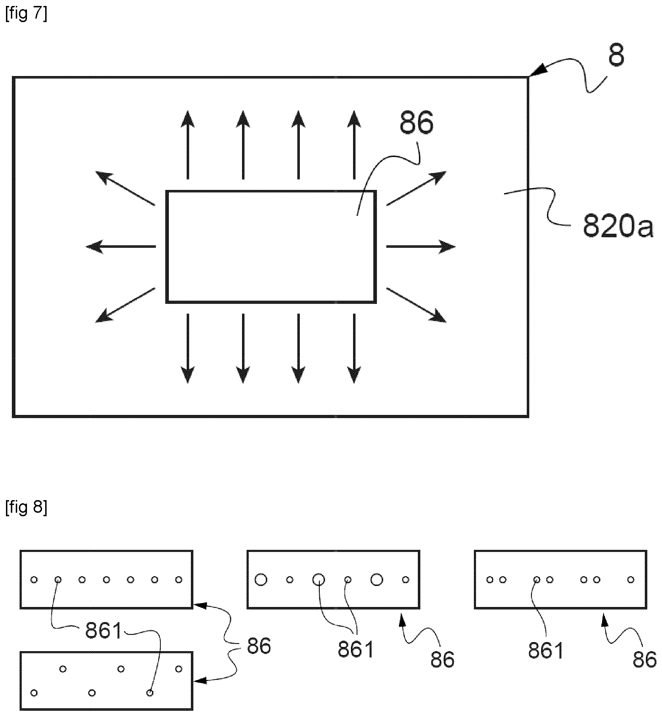

Comme la forme de la buse 86 diffère de celle de l'enveloppe, la buse 86 est conçue pour permettre une diffusion du fluide qui est homogène, permettant un refroidissement homogène de la feuille de verre. Pour cela, deux paramètres sont ajustés : le premier paramètre est l'intervalle entre deux ouvertures 861 contiguës et le second paramètre est le diamètre des ouvertures 861 comme visibles à la figure 8.

En effet, avec une buse 86 circulaire munie d'ouvertures 861 réparties régulièrement, il existe la possibilité que des portions de l'enveloppe 820, et plus particulièrement, des portions de la périphérie de l'enveloppe soient moins bien refroidies. Cela étant due à la différence de forme entre la buse 86 et l'enveloppe 820.

En faisant varier l'écart entre les ouvertures 861, il est possible de resserrer l'écart entre les ouvertures 861 pour diffuser le fluide de refroidissement F vers des portions avec une forme complexe.

Le paramètre du diamètre des ouvertures 861 est lié à la distance entre la buse 86 et l'enveloppe 820. En effet, avec une buse circulaire et une enveloppe de forme carré, la totalité de l'enveloppe 820 n'est pas à la même distance de ladite buse 86. Pour compenser cela, le diamètre des ouvertures est modifié. Comme le débit est le même, alors la variation du diamètre entraine une variation de la pression. Les ouvertures 861 avec un diamètre plus petit ont donc une pression plus forte et donc permettent au fluide de refroidissement d'être projeté à une distance plus grande.

Il est possible d'avoir des ouvertures 861 dont les écartements et les diamètres sont différents afin de rendre la diffusion du fluide de refroidissement F la plus homogène. En ayant des ouvertures 861 avec des diamètres différents, la buse 86 est capable de diffuser le fluide à des distances différentes et donc d'avoir une diffusion et donc un refroidissement plus homogène.

Les ouvertures 861 de la buse 86 peuvent aussi se situées sur des lignes différentes de sorte à diffuser le fluide de refroidissement à des hauteurs différentes.

Dans une seconde solution visible à la figure 7, la buse 86 est conçue pour avoir une forme calquée sur celle de l'enveloppe 820. Si l'enveloppe 820 présente une forme trapézoïdale alors la buse présente également trapézoïdale, les côtés de l'enveloppe 820 étant parallèles aux côtés de la buse. Cette solution est astucieuse en ce qu'elle permet d'avoir une buse dont les ouvertures sont identiques et réparties de façon homogène. En effet, comme la buse 86 présente une forme identique à celle de l'enveloppe alors toutes les ouvertures 861 ont à égale distance de l'enveloppe. Dans ce cas, le diamètre des ouvertures n'a pas besoin de varier.

Dans une variante, la buse 86, quelle présente une forme identique ou différente de celle de l'enveloppe 820, est telle qu'elle est conçue pour éviter que diffuser le fluide de refroidissement directement dans un coin de l'enveloppe. En effet, dans le cas d'une enveloppe non circulaire, ladite enveloppe comprend des côtés et des coins. Ces coins sont des zones au niveau desquelles le fluide de refroidissement peut se concentrer.

La buse 86 de l'outil selon l'invention est donc agencée pour ne pas avoir d'ouverture(s) 861 en regard d'un coin de l'enveloppe 820. Pour cela, l'embase servant à monter la buse 86 comprend, au niveau de sa portion intérieure, un détrompeur. Un tel détrompeur est utilisé pour que, lors du montage de la buse sur ladite portion intérieure, la buse présente une position particulière.

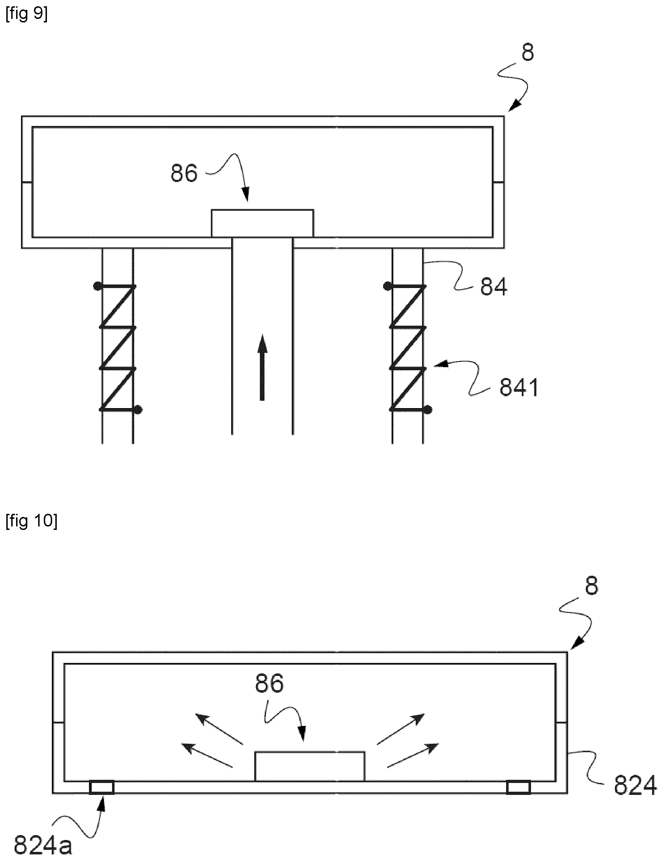

Dans une autre variante visible à la figure 9, le ou les éléments de translation 84 portant l'enveloppe dudit outil comprenant en outre des moyens ressort 814 pour que ledit outil soit monté sur ressort, sur amortissement. Ces moyens ressorts 814 peuvent comprend au moins un ressort ou au moins une bague élastique. Ce ressort ou cette bague élastique monté sur un élément de translation est utilisé pour supprimer les risques de marquage. En effet, lors de l'application de l'outil sur la feuille de verre, celle-ci étant chaude, il existe un risque de marquage de ladite feuille par ledit outil. Avec les moyens ressorts, la contrainte exerce par l'outil sur la feuille de verre est diminuée de sorte que le risque de marquage s'en trouve diminuée.

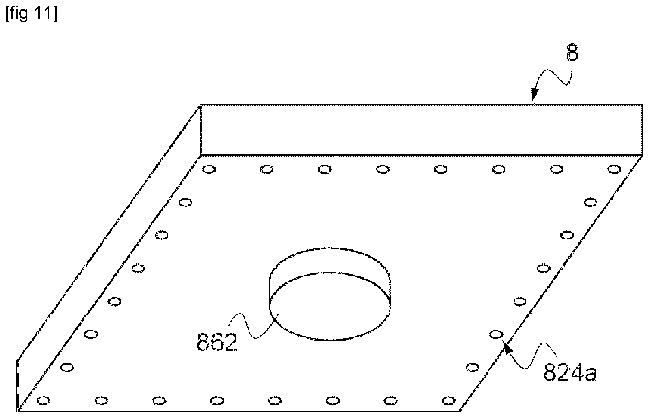

Dans une autre variante visible aux figures 10 et 11, l'outil 8 est conçu pour faciliter la localisation du refroidissement au niveau de la périphérie du contour. En effet, un des buts de l'outil de refroidissement 8 selon l'invention est de permettre d'avoir une zone sous contrainte permettre une découpe plus facile. Dans cette variante, l'enveloppe comprend 820, au niveau de ma demi coque inférieure 824, une pluralité de trous 824a. Ces trous 824a, traversant, permettent au fluide de refroidissement d'être évacué. Ainsi, la buse 86 éjecte le fluide de refroidissement dans l'enceinte vers le contour de l'enveloppe. Le fluide est alors rapidement évacué par les trous 824a de la demi coque intérieure. Cette variante est particulièrement avantageuse pour la découpe d'une grande surface. En effet, dans le cas d'une grande surface à découper, la présente variante est avantageuse en ce qu'elle permet de refroidir uniformement le contour pour avoir un « trait » de découpe facile à découper plutôt que d'avoir un refroidissement non uniforme de la totalité de la surface.

Par conséquent, la zone refroidit dans laquelle des contraintes de compression est localisée au niveau du contour de l'outil de refroidissement 8.

L'outil de refroidissement 8 selon l'invention est utilisé lors du procédé de mise en forme d'une feuille de verre. Dans un procédé de formage d'une feuille de verre, celle-amenée à sa température de ramollissement, supérieure à 450°C est ensuite conduite toujours supportée par le convoyeur 3 jusqu'à la station de bombage 4.

Dans la station de bombage 4, un cadre de pressage 5 est disposé sous le plan défini par le convoyeur à rouleaux 3. Lorsque la feuille de verre 2 arrive au-dessus de ce cadre, la feuille de verre est positionné dans ladite station puis le cadre de pressage 5 traverse alors le lit de rouleaux 3 pour venir soulever la feuille de verre. La feuille de verre est soulevée pour être mise en contact avec la forme supérieure pour lui donner la forme souhaitée. Ledit outil de refroidissement 8, intégré à la station de bombage, selon l'invention est au moins en même temps que le cadre de pressage via le ou les éléments de translation. Une fois au contact de la feuille de verre, ledit outil de refroidissement est commandé pour que le fluide de refroidissement F soit envoyé dans la canalisation pour être diffusé par la buse 86. Cette diffusion permet de refroidir la surface de contact de localement pour créer localement des contraintes en compression.

Le fluide de refroidissement est injecté dans l'enceinte 820a de l'outil dès qu'il y a contact avec la feuille de verre ou ultérieurement selon des paramètres comme le temps, la température de la feuille de verre par exemple.

Apres l'étape de refroidissement avec création des contraintes en compression, une étape de rompage est réalisée. Cette étape de rompage consiste à casser la zone de la feuille de verre correspondant à la zone qui a été au contact de l'outil de refroidissement. Cette zone peut être juste le contour ou toute la surface.

L'étape de rompage consiste en la réalisation d'un trait de découpe puis au rompage par application d'un moyen laser ou par jet d'eau ou par tout autre moyen possible.

Bien entendu, la présente invention ne se limite pas à l'exemple illustré mais est susceptible de diverses variantes et modifications qui apparaîtront à l'homme de l'art. La station de bombage peut comprendre plusieurs outils de refroidissement selon l'invention. Ces outils de refroidissement peuvent avoir des formes qui, en s'associant, forment la zone à découper. Cette possibilité est avantageuse en ce qu'elle permet de diviser une grande surface en au moins deux surfaces plus petites plus faciles à refroidir. Par ailleurs, il est possible d'avoir une forme complexe qui est diviser en des formes moins complexes pour le refroidissement.

Dans une autre variante, la face supérieure 821 de l'enveloppe 820 comprend au moins deux surfaces de contact 81. Ces surfaces de contact 81 peuvent être identiques : symétriques ou non, ou différentes : une surface peut être pleine, l'autre un contour. Il est possible que, dans l'enceinte 820a, une buse 86 soit logée ou plusieurs buses, une par surface de contact 81.

## Revendications

1. Outil de refroidissement (8) local par contact d'une feuille de verre (2) à une température supérieure à 450°C, dit outil de contact, comprenant au moins une surface de contact (81) destinée à venir au contact de la feuille de verre, ledit outil comprenant une canalisation (85) intérieure pour la circulation d'un fluide de refroidissement, notamment de l'air, **caractérisé en ce que** la surface de contact (81) présente une forme non circulaire, ledit outil comprenant une coque inférieure (824) et une coque supérieure (823) assemblées pour former une enceinte (820a) dans lequel le fluide de refroidissement est envoyé, la coque supérieure (823) portant ladite surface de contact (81), et **en ce que** l'outil comprend une buse (86) connectée à la canalisation (85) et débouchant dans ladite enceinte (820a), ladite buse (86) comprenant une pluralité d'ouvertures (861) est configurée pour diffuser le fluide de refroidissement de manière homogène dans l'enceinte (820a).

2. Outil selon la revendication précédente, **caractérisé en ce que** la surface de contact (81) s'étend sur toute ou partie de la coque supérieure (823).

3. Outil selon la revendication précédente, **caractérisé en ce que** la surface de contact (81) est une surface pleine ou un contour.

4. Outil selon l'une des revendications 1 à 3, dans lequel la canalisation (85) débouche sur la coque inférieure (824).

5. Outil selon la revendication 1, dans lequel ladite buse (86) présente la même forme que la face de contact dudit outil.

6. Outil selon la revendication 1, dans lequel ladite buse (86) présente une forme différente de celle de la face de contact dudit outil.

7. Outil selon la revendication 5, dans lequel les trous de ladite buse (86) sont régulièrement répartis.

8. Outil selon la revendication 6, dans lequel la répartition des ouvertures (861) de ladite buse (86) est inégale.

9. Outil selon l'une des revendications précédentes, **caractérisé en ce que** l'outil est monté mobile sur amortissement.

10. Outil selon la revendication précédente, **caractérisé en ce que** ledit outil est monté sur au moins un élément de translation (84) pour être appliqué au contact de la surface à refroidir, cet élément de translation comprend au moins un élément ressort.

11. Outil selon l'une des revendications précédentes, **caractérisé en ce que** la coque inférieure (824) est munie d'une pluralité de trous (824a) permettant l'évacuation du fluide de refroidissement.

12. Station de bombage (4) d'une feuille de verre dans laquelle une feuille de verre (2) à une température supérieure à 450°C est amenée entre une forme supérieure (6) et une forme inférieure (5) pour y être mise en forme, **caractérisé en ce que** la forme inférieure (5) intègre au moins un outil de refroidissement (8) local selon l'une des revendications 1 à 11.

13. Procédé de refroidissement d'une zone d'une feuille de verre, ladite feuille de verre étant amenée dans une station de bombage (4) selon la revendication 12, ledit procédé consistant à, lorsque la feuille de verre (2) est pincée entre la forme supérieure (6) et la forme inférieure (5), plaquer ledit au moins un outil de refroidissement (8) local, par au moins une surface de contact (81), sur la feuille de verre (2) pour y injecter un fluide de refroidissement de sorte à créer des contraintes de compression dans la zone de la feuille de verre (2) en contact avec ledit outil de refroidissement (8) local.

## Patentansprüche

1. Werkzeug (8) zur lokalen Kühlung durch Kontakt mit einer Glasscheibe (2) bei einer Temperatur von über 450 °C, so genanntes Kontaktwerkzeug, umfassend mindestens eine Kontaktfläche (81), die dazu bestimmt ist, mit der Glasscheibe in Kontakt zu kommen, wobei das Werkzeug eine innere Leitung (85) für die Zirkulation eines Kühlfluids, insbesondere Luft, umfasst, **dadurch gekennzeichnet, dass** die Kontaktfläche (81) eine nicht kreisförmige Form aufweist, wobei das Werkzeug eine untere Schale (824) und eine obere Schale (823) umfasst, die zusammengebaut sind, um ein Gehäuse (820a) zu bilden, in das das Kühlfluid geleitet wird, wobei die obere Schale (823) die Kontaktfläche (81) trägt, und dadurch, dass das Werkzeug eine Düse (86) umfasst, die mit der Leitung (85) verbunden ist und in das Gehäuse (820a) mündet, wobei die Düse (86), die eine Vielzahl von Öffnungen (861) umfasst, dazu konfiguriert ist, das Kühlfluid homogen in dem Gehäuse (820a) zu verteilen.

2. Werkzeug nach dem vorstehenden Anspruch,
**dadurch gekennzeichnet, dass** sich die Kontaktfläche (81) über die Gesamtheit oder einen Teil der oberen Schale (823) erstreckt.

3. Werkzeug nach dem vorstehenden Anspruch,
**dadurch gekennzeichnet, dass** die Kontaktfläche (81) eine volle Fläche oder eine Kontur ist.

4. Werkzeug nach einem der Ansprüche 1 bis 3, wobei die Leitung (85) in die untere Schale (824) mündet.

5. Werkzeug nach Anspruch 1, wobei die Düse (86) die gleiche Form wie die Kontaktfläche des Werkzeugs aufweist.

6. Werkzeug nach Anspruch 1, wobei die Düse (86) eine andere Form als die Kontaktfläche des Werkzeugs aufweist.

7. Werkzeug nach Anspruch 5, wobei die Löcher der Düse (86) gleichmäßig verteilt sind.

8. Werkzeug nach Anspruch 6, wobei die Verteilung der Öffnungen (861) der Düse (86) ungleichmäßig ist.

9. Werkzeug nach einem der vorstehenden Ansprüche,
**dadurch gekennzeichnet, dass** das Werkzeug beweglich auf Dämpfung montiert ist.

10. Werkzeug nach dem vorstehenden Anspruch,
**dadurch gekennzeichnet, dass** das Werkzeug auf mindestens einem Translationselement (84) montiert ist, um in Kontakt mit der zu kühlenden Oberfläche gebracht zu werden, wobei dieses Translationselement mindestens ein Federelement umfasst.

11. Werkzeug nach einem der vorstehenden Ansprüche,
**dadurch gekennzeichnet, dass** die untere Schale (824) mit einer Vielzahl von Löchern (824a) versehen ist, die die Ableitung des Kühlfluids ermöglichen.

12. Biegestation (4) für eine Glasscheibe, in der eine Glasscheibe (2) bei einer Temperatur von über 450 °C zwischen eine obere Form (6) und eine untere Form (5) eingebracht wird, um dort geformt zu werden, **dadurch gekennzeichnet, dass** in die untere Form (5) mindestens ein Werkzeug (8) zur lokalen Kühlung nach einem der Ansprüche 1 bis 11 integriert ist.

13. Verfahren zum Kühlen einer Zone einer Glasscheibe, wobei die Glasscheibe in eine Biegestation (4) nach Anspruch 12 eingebracht wird, wobei das Verfahren darin besteht, dass, wenn die Glasscheibe (2) zwischen der oberen Form (6) und der unteren Form (5) geklemmt ist, das mindestens eine Werkzeug (8) zur lokalen Kühlung mit mindestens einer Kontaktfläche (81) an die Glasscheibe (2) anzulegen, um dort ein Kühlfluid zu injizieren, sodass Druckspannungen in der Zone der Glasscheibe (2) erzeugt werden, die mit dem Werkzeug (8) zur lokalen Kühlung in Kontakt steht.

## Claims

1. A tool (8) for locally cooling a glass sheet (2), by contact, to a temperature of greater than 450°C, which tool is referred to as a contact tool and comprises at least one contact surface (81) intended to come into contact with the glass sheet, said tool comprising an inner pipe (85) for the flow of a cooling fluid, in particular air, **characterized in that** the contact surface (81) has a non-circular shape, said tool comprising a lower shell (824) and an upper shell (823) assembled to form an enclosure (820a) into which the cooling fluid is fed, the upper shell (823) carrying the contact surface (81), and **in that** the tool comprises a nozzle (86) connected to the pipe (85) and opening into the enclosure (820a), said nozzle (86) comprising a plurality of openings (861) for diffusing the cooling fluid in a consistent manner into said enclosure (820a).

2. The tool according to the preceding claim, **characterized in that** the contact surface (81) extends over all or part of the upper shell (823).

3. The tool according to the preceding claim, **characterized in that** the contact surface (81) is a solid surface or a contour.

4. The tool according to one of claims 1 to 3, wherein the pipe (85) opens onto the lower shell (824).

5. The tool according to the claim 1, wherein said nozzle (86) has the same shape as the contact face of said tool.

6. The tool according to claim 1, wherein said nozzle (86) has a shape different from that of the contact face of said tool.

7. The tool according to claim 5, wherein the holes of said nozzle (86) are evenly distributed.

8. The tool according to claim 6, wherein the distribution of the openings (861) of said nozzle (86) is uneven.

9. The tool according to one of the preceding claims, **characterized in that** the tool is movably mounted with shock absorption.

10. The tool according to the preceding claim, **characterized in that** said tool is mounted on at least one translation element (84) to be applied in contact with the surface to be cooled, this translation element comprising at least one spring element.

11. The tool according to one of the preceding claims, **characterized in that** the lower shell (824) is provided with a plurality of holes (824a) for discharging the cooling fluid.

12. A glass sheet bending station (4) into which a glass sheet (2) at a temperature of greater than 450°C is fed between an upper mold (6) and a lower mold (5) to be shaped therein, **characterized in that** the lower mold (5) is arranged to incorporate at least one tool (8) for locally cooling according to one of the claims 1 to 11.

13. A method for cooling a zone of a glass sheet, said glass sheet being fed into a bending station (4) according to claim 12, said method consisting in, when the glass sheet (2) is pinched between the upper mold (6) and the lower mold (5), placing said at least one tool (8) for locally cooling, by at least one contact surface (81), on the glass sheet (2) to inject a cooling fluid therein so as to create compressive stresses in the zone of the glass sheet (2) in contact with said tool (8) for locally cooling.
